**Europäisches Patentamt**

**European Patent Office**

**Office européen des brevets**

(19)

(11) **EP 1 591 008 A1**

(12) **EUROPEAN PATENT APPLICATION**
published in accordance with Art. 158(3) EPC

(43) Date of publication:
**02.11.2005 Bulletin 2005/44**

(51) Int Cl.⁷: **A01K 87/00**

(21) Application number: **03815446.4**

(86) International application number:
**PCT/JP2003/000687**

(22) Date of filing: **24.01.2003**

(87) International publication number:
**WO 2004/064509 (05.08.2004 Gazette 2004/32)**

(84) Designated Contracting States:
**AT BE BG CH CY CZ DE DK EE ES FI FR GB GR HU IE IT LI LU MC NL PT SE SI SK TR**

(71) Applicant: **SHIMANO INC.**
**Sakai-shi, Osaka 590-8577 (JP)**

(72) Inventors:
 • **KAWASHITA, Gouki, c/o Shimano Inc.**
 **Sakai-shi, Osaka 590-8577 (JP)**
 • **OKADA, Muneki, c/o Shimano Inc.**
 **Sakai-shi, Osaka 590-8577 (JP)**

 • **KISHIMOTO, Toshihisa, c/o Shimano Inc.**
 **Sakai-shi, Osaka 590-8577 (JP)**
 • **KANAZAWA, Masahide, c/o Shimano Inc.**
 **Sakai-shi, Osaka 590-8577 (JP)**
 • **MORITA, Atsushi, c/o Shimano Inc.**
 **Sakai-shi, Osaka 590-8577 (JP)**
 • **OKUDA, Ryozo, c/o Shimano Inc.**
 **Sakai-shi, Osaka 590-8577 (JP)**

(74) Representative: **Hofmann, Harald**
 **Sonnenberg Fortmann,**
 **Postfach 33 08 65**
 **80068 München (DE)**

(54) **ROD BODY AND FISHING ROD**

(57)    The present invention provides a fishing rod composed of a fiber reinforced resin material that can provide preferable characteristics of rod. A rod body that is a tubular member composing the fishing rod comprises a main layer including a prepreg material that is produced by impregnating a reinforced fiber, such as carbon fiber or glass fiber, with a synthetic resin; a weight layer including a prepreg material with high specific gravity that is laminated on or above the main layer; and a coating layer including a coating material that coats the outer periphery of the main layer and weight layer. The content of the weight layer is 5 to 50% by weight relative to the whole rod body. Particularly, the weight layer is preferably provided in a location corresponding to any of antinode and node in the resonance vibration state.

*Fig. 2*

EP 1 591 008 A1

**Description**

[Technical Field]

The present invention relates to a fishing rod, and more particularly to a fishing rod composed of a fiber reinforced resin in which reinforced fiber, such as carbon fiber and glass fiber, is impregnated with a synthetic resin.

[Background Art]

In recent years, rod bodies that compose a fishing rod and is composed of a fiber reinforced resin material (prepreg material) in which reinforced fiber, such as carbon fiber and glass fiber, is impregnated with a synthetic resin are popular. Employing this type of material improves weight reduction and physical strength. In addition, in a fishing rod, bending deformation in casting tackle of fishing rod or catching up fish is considered as an important factor, and bending characteristics, rigidity, and so on, are also considered as important factors. For this reason, the diameter, thickness, and so on, of a rod body that composes a fishing rod are adjusted to provide preferable characteristics of fishing rod ("Choshi" of rod). For example, the following techniques are proposed. In one technique, a fiber reinforced resin material for producing a rod body is wound so as to be partially overlaid thereon (for example, see Japanese unexamined patent application No. 2002-209477, Fig. 2). In another technique, fiber reinforced resin materials with different elasticities are wound on axially different parts (for example, see Japanese unexamined patent application No. H11-289925, Fig. 2).

However, in the case where a rod body is manufactured merely so that a prepreg material is partially changed or overlaid as the aforementioned conventional techniques, this may affect the balance of fishing rod and spoil the "characteristics of rod". Therefore, there exists a need for an improved technique to adjust the characteristics of rod.

An object of the present invention is to provide a fishing rod composed of a fiber reinforced resin material that can provide preferable characteristics of rod.

[Disclosure of the Invention]

A rod body, of one aspect of the present invention, that is a tubular member composing a fishing rod comprises a main layer including a prepreg material that is produced by impregnating a reinforced fiber, such as carbon fiber or glass fiber, with a synthetic resin; a weight layer including a prepreg material with high specific gravity that is laminated on or above the main layer; and a coating layer including a coating material that coats the outer periphery of the main layer and weight layer, wherein the weight layer has a content of 5 to 50% by weight relative to the weight of the whole rod body. In this construction, the content of the weight layer is specified within the prescribed range in percentage by weight relative to the weight of the whole fishing rod to laminate the weight layer on or above the main layer, thus, this can provide adjustment without spoiling the characteristics of rod. In addition, it is preferable that the weight layer has a content of 15 to 50% by weight relative to the weight of the whole rod body in terms of maintenance of the characteristics of rod.

Furthermore, in a rod body of another aspect of the present invention, the weight layer is partially laminated on or above the outer periphery of the main layer, and the coating layer is applied on or above the outer periphery surface of the main layer and weight layer. In this construction, the weight layer is partially laminated on or above the outer periphery of the main layer, thus, it is possible to provide both good weight balance in the axial direction of the whole fishing rod, and preferable characteristics of rod.

Furthermore, in a rod body of another aspect of the present invention, the main layer includes a plurality of prepreg materials that are laminated, and the weight layer is laminated between the plurality of prepreg materials of the main layer. In this construction, the weight layer is laminated between the materials of the main layer, thus, it is possible to provide both good balance in the radial direction at a axially prescribed location of the whole fishing rod, and preferable characteristics of rod.

Moreover, in a rod body of another aspect of the present invention, the prepreg material with high specific gravity is a material in which glass scream impregnated with an epoxy resin is mixed with metal powder. For example, it is preferable in terms of adjustment in the characteristics of rod that the prepreg material with high specific gravity has about 600 $g/mm^2$, and thickness of about 0.110 mm.

A fishing rod, of one aspect of the present invention, comprises a plurality of connected rod bodies, and the rod body comprises a main layer including a prepreg material that is produced by impregnating a reinforced fiber, such as carbon fiber or glass fiber, with a synthetic resin; a weight layer including a prepreg material with high specific gravity that is laminated on or above the main layer; and a coating layer including a coating material that coats the outer periphery of the main layer and weight layer. In addition, the weight layer has a content of 5 to 50% by weight relative to the weight of the whole rod body, and the weight layer is provided in an axial location of the fishing rod corresponding to at least one position of antinode or node in the secondary resonance vibration state of the whole fishing rod.

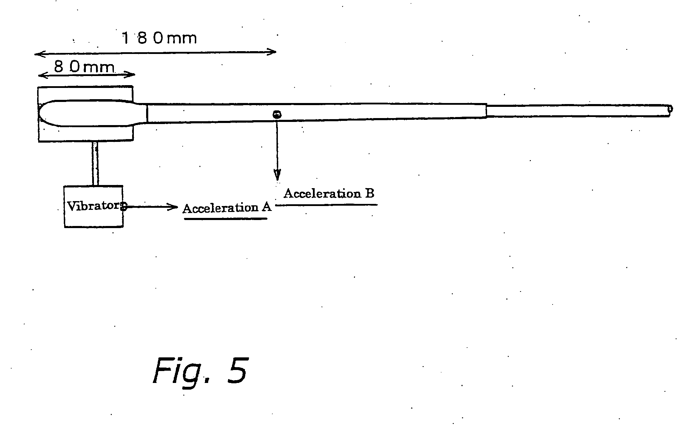

The "secondary resonance vibration" refers to as a resonance vibration of a fishing rod measured by the following method. First, a sandwich member sandwiches and secures a fishing rod in the range of 80 mm from the handle-end side end thereof to maintain the fishing rod in the horizontal direction. A vibrator vibrates the fishing rod via this sandwich member (frequency of fishing rod). An acceleration sensor senses the acceleration of this vibrator and obtains an input acceleration value (A). On the other hand, the acceleration sensor senses the acceleration at the position of 180 mm from the handle-end side end of the fishing rod and obtains the output acceleration value (B) (see Fig. 5). The ratios of B/A are plotted in coordinates with one axis of the frequency of fishing rod. The states where the ratios of B/A reach the peaks (resonance vibration states) are obtained as the primary, secondary, third, and fourth resonance vibrations in the increasing order of the frequencies of fishing rod. An example of graph of the ratios of B/A plotted in coordinates with one axis of the frequency of fishing rod is shown below (it is noted that this graph shown in Table 1 is only an example, but not shows particular values that relates to the essential characteristics of this invention).

(TABLE 1)

The above graph is only an example. The relationship between them changes depending on a material, thickness, diameter, weight distribution, and so on, of the rod body that composes a fishing rod.

In the case where the weight layer is provided in a location corresponding to the antinode or node in the secondary resonance vibration state among the resonance vibrations to partially weight this location, it is possible to effectively adjust the characteristics of rod.

For example, when the weight layer is provided in an antinode part to partially weight the part, it is possible to effectively shift the resonance frequency produced in the resonance vibration, and thus to adjust the resonance vibration state. When the weight layer is provided in a node part to partially weight the part, it is possible to weight the part while successfully averting effects on the resonance frequency produced in the resonance vibration.

Furthermore, a fishing rod, of another aspect of the present invention, comprises a plurality of connected rod bodies, and the rod body comprises a main layer including a prepreg material that is produced by impregnating a reinforced fiber, such as carbon fiber or glass fiber, with a synthetic resin; a weight layer including a prepreg material with high specific gravity that is laminated on or above the main layer; and a coating layer including a coating material that coats the outer periphery of the main layer and weight layer. In addition, the weight layer has a content of 5 to 50% by weight relative to the weight of the whole rod body, and the weight layer is provided in an axial location of the fishing rod corresponding to at least one position of antinode or node in the third resonance vibration state of the whole fishing rod.

The "third resonance vibration" refers to as a third resonance vibration state that is measured by the aforementioned method. In the case where the weight layer is provided in a location corresponding to the antinode or node in the third resonance vibration state to partially weight this location, it is possible to effectively adjust the characteristics of rod.

Moreover, a fishing rod, of still another aspect of the present invention, comprises a plurality of connected rod bodies, and the rod body comprises a main layer including a prepreg material that is produced by impregnating a reinforced fiber, such as carbon fiber or glass fiber, with a synthetic resin; a weight layer including a prepreg material with high specific gravity that is laminated on or above the main layer; and a coating layer including a coating material that coats the outer periphery of the main layer and weight layer. In addition, the weight layer has a content of 5 to 50% by weight relative to the weight of the whole rod body, and the weight layer is provided in an axial location of the fishing rod corresponding to at least one position of antinode or node in the fourth resonance vibration state of the whole fishing rod.

The "fourth resonance vibration" refers to as a fourth resonance vibration that is measured by the aforementioned method. In the case where the weight layer is provided in a location corresponding to the antinode or node in the fourth resonance vibration state to partially weight this location, it is possible to effectively adjust the characteristics of rod.

[Brief Description of the Drawings]

Fig. 1 is a view showing the whole fishing rod according to a first embodiment.
Fig. 2 is a cross-sectional view of an intermediate rod 2 of Fig. 1.
Fig. 3 is a view showing a manufacturing process of the rod body of Fig. 2.
Fig. 4 is a view showing a manufacturing process of a rod body according to another embodiment.
Fig. 5 is a view showing a measurement state of resonance frequency according to the present invention.
Fig. 6 is a reference view in a finite element model.
Fig. 7 is a reference view in a link model.

[Best Mode of Carrying Out the Invention]

A fishing rod in which one embodiment of the present invention is adopted is described.

(Structure of Hera Fishing Rod)

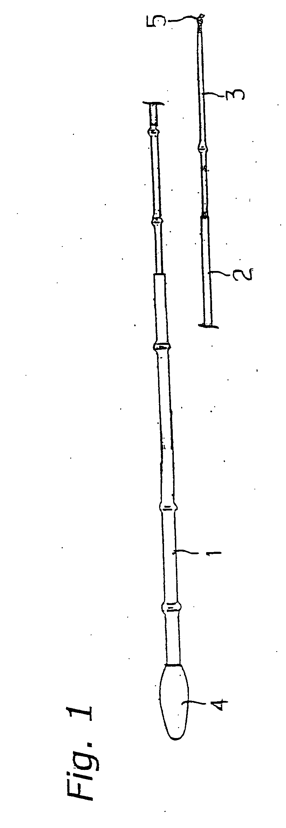

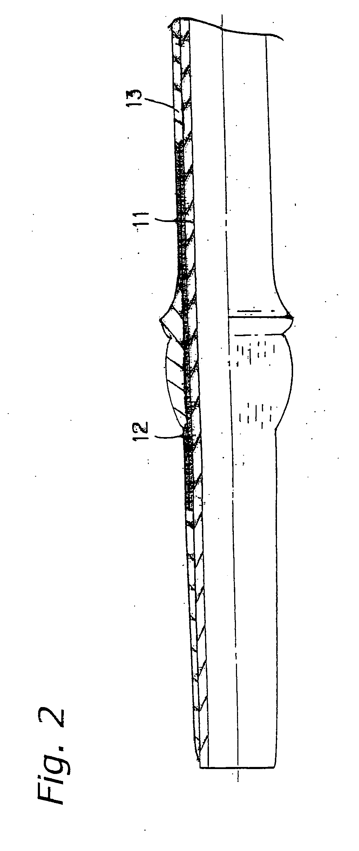

The fishing rod is a hera fishing rod used for hera-crucian fishing. The fishing rod includes three rod bodies of a base rod 1, an intermediate rod 2, and a fore end rod 3 in order from the handle end side, as shown in Fig. 1. These rod bodies are formed by burning a prepreg material reinforced fiber, such as carbon fiber or glass fiber, impregnated with a synthetic resin. As discussed later, prepreg with high specific gravity is partially laminated. These rod bodies are coated to have fake natural bamboo appearance. For example, a knot or a branch trace of bamboo can be formed by three-dimensional coating (see Fig. 2).

The rod bodies are successively connected in a so-called put-over joint manner. For example, the handle-end side end of the intermediate rod 2 is partially inserted into the fore side end of the base rod 1, thus they are connected to each other. But a joint manner for connecting these rod bodies is not limited to a put-over joint. Needless to say, known joints (for example, telescopic joint, spigot joint, and so on) can be applied. In addition, a grip 4 formed by winding a tape-shaped material impregnated with a urethane resin, or the like, is provided on the handle-end side end of the base rod 1, while a fishing line interlock 5 is attached to the fore side end of the fore end rod 3. In the state where these three rod bodies are connected successively, the overall length of hera fishing rod is 9 shaku (2700 mm).

With reference to Fig. 2, the intermediate rod 2 is described as exemplary example of the structure of rod bodies that compose this hera fishing rod.

The intermediate rod 2 includes a main layer 11, a weight layer 12 laminated in a certain range in the axial direction as an outer periphery layer of the main layer 11, and a coating layer 13 laminated on or above the outer periphery of these main layer 11 and weight layer 12.

The main layer 11 is a layer composed of a laminated prepreg material. In this case, one kind or two different kinds of prepreg material(s) can be laminated. For example, tape-shaped and sheet-shaped prepreg materials in which carbon fiber is impregnated with an epoxy resin can be given as the material. In the tape-shaped prepreg material, the carbon fiber is oriented in the circumferential direction or in the direction that extends at a certain angle relative to the circumferential direction. In the sheet-shaped prepreg material, carbon fiber is oriented in the axial direction.

The weight layer 12 is composed of a prepreg material with high specific gravity. The prepreg material with high specific gravity is a material in which glass scrim impregnated with an epoxy resin and metal powder such as tungsten are mixed, for example. This prepreg material with high specific gravity has an extent of 500 to 600 g/ mm$^2$, and of thickness of 0.100 to 0.150 mm. This prepreg material with high specific gravity is laminated on the aforementioned main layer 11 in a prescribed axial location calculated as discussed later.

In addition, the content of the weight layer 12 is 5 to 50% by weight, preferably 15 to 50% by weight relative to the whole rod body (from the main layer 11 to the coating layer 13). If the content of the weight layer 12 exceeds the prescribed range, this may spoil the balance of the whole fishing rod and make the "characteristics of rod" improper.

The coating layer 13 is formed by applying a synthetic resin coating material, such as epoxy resin and urethane resin. The stepped difference between the main layer 11 and the weight layer 12 is canceled by this coating layer 13. In the case where a knot of bamboo is formed on the intermediate rod 2 to have fake natural bamboo appearance as shown in Fig. 2, a prepreg material is partially wound and burned, or an epoxy resin is applied thickly, and it is cuts off in a prescribed shape to form a knot of bamboo, and so on. Although other rod bodies have different diameters, and so on, they have similar structure, thus, their description is omitted.

(Method for Manufacturing Hera Fishing Rod)

A method for manufacturing this hera fishing rod is described. The case where its overall length is 2700 mm and its secondary resonance frequency is set to 5.45 Hz is described as an example.

First, the weight balance of a rod body is calculated so that the secondary resonance frequency of the fishing rod is 5.45 Hz when the target base rod 1 to fore end rod 3 are connected to each other as one hera fishing rod. That is, in consideration of target diameters and lengths of base rod 1 to the fore end rod 3, elasticities and weights of a prepreg material and a prepreg material with high specific gravity, and so on, the weight distribution in the rod bodies that provide 5.45 Hz of frequency (resonance frequency) of the fishing rod in the secondary resonance vibration is simulated, then the axial range where the aforementioned prepreg material with high specific gravity should be laminated is calculated for every rod body. In order to simulate such weight distribution, techniques, such as finite element method or link model, can be used.

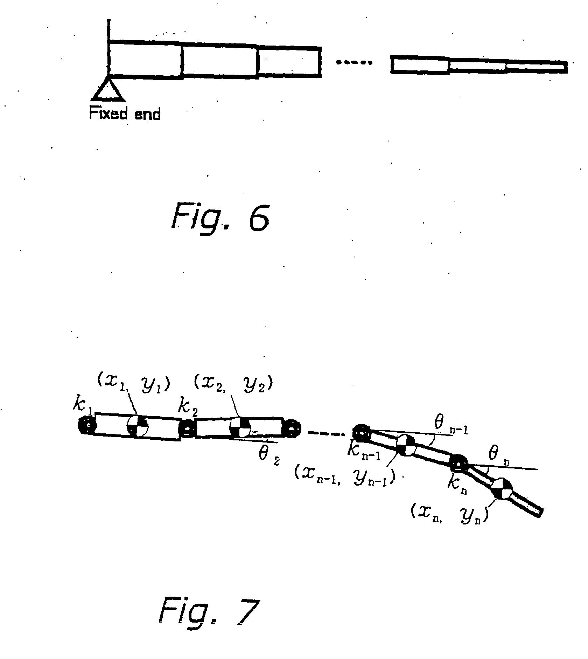

For example, in analysis by a finite element method, as shown in Fig. 6, the fishing rod is modeled by using an elastic cantilever composed of N of one-dimensional cantilever elements that have two degrees of freedom of the translational direction and the rotational direction at node. It is assumed that each cantilever element is uniform inside the element in cross section. Under the boundary condition in the state where one end is an fixed end and the other end is a free end, the resonance frequency and the mode shape corresponding to it are calculated.

In analysis by a link model, since a fishing rod largely deforms in use, the fishing rod is modeled by using multibody dynamics corresponding to large deformation (geometric nonlinearity). As shown in Fig. 7, in this case, the fishing rod is modeled by using a multibody composed of N of rigid body links with rotation spring at node. The fishing rod is modeled by using a link model, thus, the posture angle between rigid body links adjacent to each other is not limited. Accordingly, it is possible to express even large deformation. The equation of motion of the fishing rod can be represented by Equation 1 under the constraint condition.

$$\begin{bmatrix} \mathbf{M} & \Phi_q^T \\ \Phi_q & 0 \end{bmatrix} \begin{Bmatrix} \ddot{q} \\ \lambda \end{Bmatrix} = \begin{Bmatrix} Q \\ \gamma \end{Bmatrix}$$

(EQUATION 1)

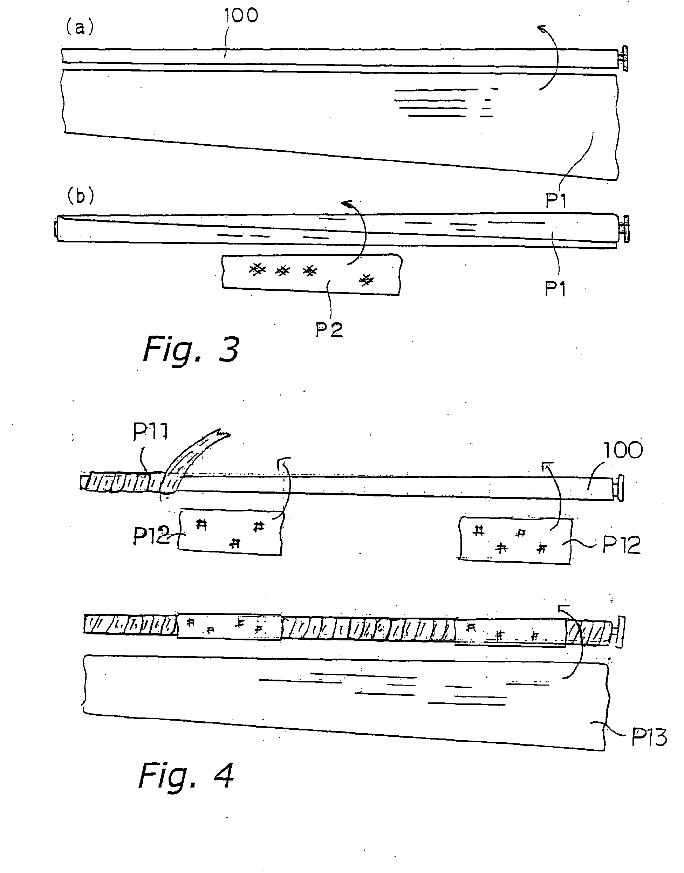

Subsequently, as shown in Fig. 3(a), a mandrel 100 that corresponds to diameter or taper variation of each rod body is wound with a necessary prepreg material P1 (a tape-shaped or sheet-shaped material can be wound as discussed above), and a prepreg material with high specific gravity P2 is wound around the prescribed axial range that is calculated as discussed above (Fig. 3(b)). In order to sufficiently provide weight, several plies of the prepreg material with high specific gravity P2 may be wound. Although only one sheet of prepreg material with high specific gravity P2 is wound on the prepreg material P1 in Fig. 3(b), two or more sheets of prepreg materials with high specific gravity P2 may be wound so as to be spaced from each other in the axial direction. In this case, the prepreg material with high specific gravity P2 is provided in a location corresponding to the antinode or node of the secondary resonance vibration of the fishing rod. Partially weighting the location can effectively adjust the characteristics of rod.

In addition, an epoxy resin is applied to its outer periphery, thus, a rod material corresponding to each of the base rod 1 to the fore end rod 3 is produced. Each of them is burned in a furnace. After burning, each rod material is subjected to polish processing on its outer periphery, and is cut at both ends to have a prescribed axial length. Thus, rod bodies are produced. In this embodiment, the case where the fishing rod is adjusted based on the resonance vibration characteristics in the secondary resonance vibration is illustrated, however, a fishing rod may be adjusted based on the resonance vibration characteristics in the third or fourth resonance vibration.

(Modified Embodiment)

Furthermore, the following description describes a modified embodiment of the foregoing embodiment.

A rod body may be manufactured as follows. As shown in Fig. 4, a tape-shaped prepreg material P11 is spirally wound around the outer periphery of the mandrel 100 without a gap. A prepreg material with high specific gravity P12 is partially wound around the outer periphery thereof. A sheet-shaped prepreg material P13 is wound around the outer periphery thereof. In this case, a location where the prepreg material with high specific gravity P12 is provided is determined based on the simulation of weight distribution in each rod body so that the frequency of the fishing rod in any of the secondary to fourth resonance vibrations (resonance frequency) is a desired frequency, similarly to the foregoing embodiment. The prepreg material with high specific gravity P 12 is provided in a location corresponding to at least any of antinode and node in a particular resonance vibration state. The prepreg material with high specific gravity P12 is also a material mixed with metal powder similarly to the foregoing embodiment.

In addition, in this embodiment, although this description describes a hera fishing rod, a type of fishing rod is not limited to this. Even in the case of a fishing rod other than hera fishing rod, since, generally, the characteristics of rod is an important factor, needless to say, the present invention can be applied to other types of fishing rods. It is very effective to apply the present invention to a fly fishing rod, a lure fishing rod, and so on, for example.

[Industrial Applicability]

According to the present invention, it is possible to provide a fishing rod composed of a fiber reinforced resin material that can provide preferable characteristics of rod.

**Claims**

1. A rod body that is a tubular member composing a fishing rod comprising:

   a main layer including a prepreg material that is produced by impregnating a reinforced fiber, such as carbon fiber or glass fiber, with a synthetic resin;
   a weight layer including a prepreg material with high specific gravity that is laminated on or above said main layer; and
   a coating layer including a coating material that coats the outer periphery of said main layer and weight layer, wherein
   said weight layer has a content of 5 to 50% by weight relative to the weight of the whole rod body.

2. The rod body set forth in claim 1, wherein said weight layer is partially laminated on or above the outer periphery of said main layer, and said coating layer is applied on or above the outer periphery surface of said main layer and weight layer.

3. The rod body set forth in claim 1, wherein said main layer includes a plurality of prepreg materials that are laminated, and said weight layer is laminated between the plurality of prepreg materials of said main layer.

4. The rod body set forth in any of claims 1 to 3, wherein said prepreg material with high specific gravity is a material in which glass scrim impregnated with an epoxy resin is mixed with metal powder.

5. A fishing rod comprising a plurality of connected rod bodies, wherein said rod body comprises a main layer including a prepreg material that is produced by impregnating a reinforced fiber, such as carbon fiber or glass fiber, with a synthetic resin; a weight layer including a prepreg material with high specific gravity that is laminated on or above said main layer; and a coating layer including a coating material that coats the outer periphery of said main layer and weight layer, wherein said weight layer has a content of 5 to 50% by weight relative to the weight of the whole rod body, wherein said weight layer is provided in an axial location of the fishing rod corresponding to at least one position of antinode or node in the secondary resonance vibration state of the whole fishing rod.

6. A fishing rod comprising a plurality of connected rod bodies, wherein said rod body comprises a main layer including a prepreg material that is produced by impregnating a reinforced fiber, such as carbon fiber or glass fiber, with a synthetic resin; a weight layer including a prepreg material with high specific gravity that is laminated on or above said main layer; and a coating layer including a coating material that coats the outer periphery of said main layer and weight layer, wherein said weight layer has a content of 5 to 50% by weight relative to the weight of the whole rod body, wherein

said weight layer is provided in an axial location of the fishing rod corresponding to at least one position of antinode or node in the third resonance vibration state of the whole fishing rod.

7. A fishing rod comprising a plurality of connected rod bodies, wherein

said rod body comprises a main layer including a prepreg material that is produced by impregnating a reinforced fiber, such as carbon fiber or glass fiber, with a synthetic resin; a weight layer including a prepreg material with high specific gravity that is laminated on or above said main layer; and a coating layer including a coating material that coats the outer periphery of said main layer and weight layer, wherein said weight layer has a content of 5 to 50% by weight relative to the weight of the whole rod body, wherein

said weight layer is provided in an axial location of the fishing rod corresponding to at least one position of antinode or node in the fourth resonance vibration state of the whole fishing rod.

Fig. 1

Fig. 2

EP 1 591 008 A1

(a)

100

P1

(b)

P1

P2

**Fig. 3**

P11

100

P12

P12

P13

**Fig. 4**

*Fig. 5*

Fixed end

Fig. 6

Fig. 7

**EP 1 591 008 A1**

| **INTERNATIONAL SEARCH REPORT** | International application No. |
| --- | --- |
| | PCT/JP03/00687 |

**A. CLASSIFICATION OF SUBJECT MATTER**
Int.Cl$^7$ A01K87/00

According to International Patent Classification (IPC) or to both national classification and IPC

**B. FIELDS SEARCHED**

Minimum documentation searched (classification system followed by classification symbols)
Int.Cl$^7$ A01K87/00-08

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | CD-ROM of the specification and drawings annexed to the request of Japanese Utility Model Application No. 78168/1992 (Laid-open No. 34459/1994) (Daiwa Seiko Inc.), 10 May, 1994 (10.05.94), Full text; Figs. 1 to 3 (Family: none) | 1–7 |
| Y | JP 4-320637 A (Daiwa Seiko Inc.), 11 November, 1992 (11.11.92), Full text; Figs. 1 to 9 (Family: none) | 1–7 |
| Y | JP 2000-83518 A (Kabushiki Kaisha Shimano), 28 March, 2000 (28.03.00), Full text; Figs. 1 to 7 (Family: none) | 1–7 |

| ☐ Further documents are listed in the continuation of Box C. | ☐ See patent family annex. |
| --- | --- |

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| 12 May, 2003 (12.05.03) | 27 May, 2003 (27.05.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)